# EUROPÄISCHE PATENTANMELDUNG

(11) **EP 0 989 097 A1**
(43) Veröffentlichungstag der Anmeldung: **29.03.2000**
(21) Anmeldenummer: 99118137.1
(22) Anmeldetag: 11.09.1999
(51) Int. Cl.: C02F 3/12, C02F 1/36

(54) **Verfahren zur Verhinderung der Schwimm- und/oder Blähschlammausbildung und/oder zur Beseitigung von Schwimm- und Blähschlamm in Kläranlagen**

(30) Priorität: 25.09.1998 DE 19843862
(71) Anmelder: FRAUNHOFER-GESELLSCHAFT ZUR FÖRDERUNG DER ANGEWANDTEN FORSCHUNG E.V., 80636 München (DE); IWE- Ingenieurgesellschaft für Wasser und Entsorgung mbH, 01445 Radebeul (DE); Dr. Hielscher GmbH, 14513 Teltow (DE)
(72) Erfinder: Friedrich, Hannelore, 01445 Radebeul (DE); Potthoff, Annegret, 01187 Dresden (DE); Gerlach, Udo, 01827 Birkwitz (DE); Friedrich, Eberhard, 01445 Radebeul (DE); Eichstätter, Ralf, 01309 Dresden (DE); Jobst, Karin, 01445 Radebeul (DE); Hielscher, Harald, 14532 Stahnsdorf (DE)
(74) Vertreter: Rauschenbach, Marion

(57) **Zusammenfassung**

Die Erfindung bezieht sich auf die Gebiete der Abfallwirtschaft und des Umweltschutzes und betrifft ein Verfahren zur Verhinderung der Schwimm- und/oder Blähschlammausbildung und/oder zur Beseitigung von Schwimm- und Blähschlamm in Kläranlagen.

Der Erfindung liegt die Aufgabe zugrunde ein flexibel einsetzbares Verfahren anzugeben, daß einerseits die Bildung von Blähschlamm und Schwimmschlamm verhindert und andererseits schon aufgetriebene Bläh- und Schwimmschlämme beseitigt und damit eine ordnungsgemäßen Kläranlagenbetrieb ohne aufwendige zusätzliche Maßnahmen zur Einhaltung der Überwachungsparameter gewährleistet.

Die Aufgabe wird gelöst durch ein Verfahren zur Verhinderung der Schwimm- und/oder Blähschlammausbildung und/oder zur Beseitigung von Schwimm- und Blähschlamm in Kläranlagen. bei denen der Belebtschlamm und/oder die Bläh- und Schwimmschlämme mit Ultraschall behandelt werden.

## Beschreibung

Die Erfindung bezieht sich auf die Gebiete der Abfallwirtschaft und des Umweltschutzes und betrifft ein Verfahren zur Verhinderung der Schwimm- und/oder Blähschlammausbildung und/oder zur Beseitigung von Schwimm- und Blähschlamm in Kläranlagen.

Belebtschlamm tritt bei der Klärung von Abwässern in Belebungsbecken biologischer Kläranlagen auf. Er befindet sich in den Belebungsbecken, in denen Mikroorganismen, insbesondere Bakterien, für den Abbau von gelösten organischen Stoffen in den Abwässern sorgen. Diese Bakterien wachsen und vermehren sich durch den Abbau der organischen Stoffe, das heißt, es entsteht zusätzliche Biomasse. Diese als Belebtschlamm bezeichnete Suspension muß aus dem Belebungsbecken in einem Volumenstrom abgezogen werden, der der Summe aus dem dem Belebungsbecken zulaufenden Abwasser und der gebildeten Biomasse entspricht. Dieser Belebtschlamm wird in ein Nachklärbecken eingeleitet, wo sie sedimentiert. Ein Teil des Sediments wird als Rücklaufschlamm dem Belebungsbecken wieder zugeführt, der andere Teil wird als Überschußschlamm aus dem System abgezogen und der Entsorgung zugeführt.

Jahreszeitlich bedingt oder mehr oder weniger unregelmäßig treten vor allem in den Nachklärbecken Schwimm- und/oder Blähschlamm auf, die sich unter anderem in ihrer Konsistenz voneinander unterscheiden. Das heißt, ein Teil des gesamten Belebtschlammes sedimentiert nicht, sondern schwimmt auf und bildet eine im ungünstigsten Falle durchgehende Deckschicht. Die Ursache für die Bildung beider Problemschlämme bilden Fadenbakterien. Fadenbakterien sind ein wichtiger Bestandteil der gesamten Bakterienpopulation in Belebtschlämmen. Probleme entstehen genau dann, wenn ein massives Wachstum mit überproportional starker Vermehrung dieser fadenförmigen Mikroorganismen auftritt.

Blähschlamm ist ein schlecht sedimentierender Belebtschlamm mit hohem Schlammvolumenindex. Er enthält einen hohen Anteil an Fadenbakterien, die sich unter bestimmten Bedingungen, beispielsweise infolge eines unausgewogenen Nährstoffangebotes, das heißt infolge einseitig zusammengesetzter Abwassereinleitungen, überproportional stark vermehren, die Entstehung von großen sedimentierenden Schlammaggregaten verhindern und selbst aufgrund ihrer großen Oberfläche flotieren.

Unspezifische Maßnahmen zur Beseitigung von Blähschlamm sind z. B. die Zugabe von Fällungsmitteln wie Eisensalzen [siehe z. B. Herzog, G.: Blähschlammbekämpfung mit Eisensalzen - Sind Herstellerangaben realistisch? in KA-Betriebs-Info 28(1998)2, 796-798], die teilweise oder vollständige Außerbetriebnahme der Vorklärung oder die Auslegung der Nachklärung auf einen höheren Schlammindex. Sind die Indikatororganismen bekannt und immer identisch, so sind weitere spezifische Maßnahmen, wie die Änderung der Nährstoffverhältnisse anwendbar. In DE 39 18 717 wird vorgeschlagen, Blähschlamm durch Zugabe von aktivkohleähnlichen Stoffen, die durch Pyrolyse aus Klärschlamm gewonnen wurden, zu beseitigen. In DE 36 37 090 wird empfohlen, daß in das Belebungsbecken eingeleitete, Sauerstoff enthaltende Gasgemisch so zu temperieren, daß die Temperatur nur unwesentlich von der Temperatur des Inhalts des Belebungsbeckens abweicht.

Bei Schwimmschlamm lagern sich Gasbläschen an den Fadenbakterien an, die dadurch flotieren.
Zur Beseitigung des Schwimmschlamms werden bisher neben der Überprüfung der Indirekteinleiter Maßnahmen, wie Vorschaltung eines Entgasungsbeckens, Verringerung der Schlammeindickzeit in der Nachklärung auf weniger als 2 h oder Verbesserung der Denitrifikationsleistung empfohlen. Im ungünstigsten Fall muß der Schwimmschlamm vom Nachklärbecken abgezogen und getrennt entsorgt werden (DE 37 08 079). Durch Eintrag mechanischer Energie mit einem Propeller, an dem eine mitrotierende Prallscheibe befestigt ist, ist Schwimmschlamm nach DE 36 39 690 zerstörbar. Flüssigkeit wird durch den Propeller angesaugt und gegen die Prallscheibe geschleudert, die entstehenden mittelgroßen Tropfen werden radial abgeschleudert und zerstören dabei den Schwimmschlamm.

Die Zugabe von Chemikalien, wie Eisensalzen, führt zur Ausbildung wasserhaltiger, sedimentierender Flocken. Der dabei entstehende Schlamm ist schlecht entwässerbar und daher schwierig zu entsorgen.

Unspezifische Maßnahmen, wie z.B. die (teilweise) Außerbetriebnahme der Vorklärung, führt zu schweren Störungen im Kläranlagenbetrieb, da die geforderte Reinigungsleistung nicht erbracht werden kann. Die Vorschaltung eines Entgasungsbeckens ist mit immensem Investitionsaufwand verbunden und es wird zusätzlich Platz benötigt.

Die Vorrichtungen zur Beseitigung des gebildeten Schwimmschlamms zielen nur auf die Korrektur eines eingetretenen negativen Effektes und nicht auf die Verhinderung dieses Effektes, nämlich auf die Bildung von Schwimmschlamm.

Der Erfindung liegt die Aufgabe zugrunde ein flexibel einsetzbares Verfahren anzugeben, daß einerseits die Bildung von Blähschlamm und Schwimmschlamm verhindert und andererseits schon aufgetriebene Bläh- und Schwimmschlämme beseitigt und damit eine ordnungsgemäßen Kläranlagenbetrieb ohne aufwendige zusätzliche Maßnahmen zur Einhaltung der Überwachungsparameter gewährleistet.

Die Aufgabe wird durch die in den Ansprüchen angegebene Erfindung gelöst. Weiterbildungen sind Gegenstand der Unteransprüche.

Durch das erfindungsgemäße Verfahren werden die Bildung von Bläh- und Schwimmschlämmen verhindert und bereits gebildete Bläh- und Schwimmschlämme können vollständig beseitigt werden.

Die Bildung von Bläh- oder Schwimmschlamm kann durch die richtige Zusammensetzung der eingeleiteten Abwässer und des Rücklaufschlammes in den Belebungsbecken, aber auch durch die abgestimmte Wahl des Nährstoffangebotes verhindert werden.

Es ist vorteilhaft, die Behandlung der Schlämme mit Ultraschall bereits an den Stellen in der Kläranlage durchzuführen, wo sich die Fadenbakterien überproportional vermehren. Das zu schnelle Wachstum dieser Bakterien wird dann verhindert, die Bakterienpopulation wird normalisiert.

Die erste Möglichkeit, das Nährstoffangebot im Belebungsbecken günstig zu beeinflussen und die überproportionale Vermehrung der Fadenbakterien zu unterbinden, ist die Behandlung des Rücklaufschlammes mit Ultraschall. Dabei wird im Schlamm ein einseitiges Nährstoffangebot durch Freisetzung von z.B. Phosphor-Verbindungen ausgeglichen; eine weitere Zunahme der Anzahl der Fadenbakterien wird verhindert.

Sobald trotzdem ein Ungleichgewicht auftritt, kann der Volumenstrom des Belebtschlammes, der aus dem Belebungsbecken in das Nachklärbecken geleitet wird, erfindungsgemäß mit Ultraschall behandelt werden, wobei - wie bei der Behandlung des Rücklaufschlammes - ein Energieeintrag zwischen 0,1 und 1 kWs/l ausreichend ist.

Die Bildung von Schwimmschlamm in den Nachklärbecken wird verhindert, indem durch den Energieeintrag durch Ultraschall die Gasblasen von den Fadenbakterien abgetrennt werden.

Für die Verhinderung der Blähschlammausbildung ist ein höherer Energieeintrag erforderlich, da die Fadenbakterien und die daraus gebildeten Aggregate zerstört werden müssen, um das Aufschwimmen zu vermeiden. Der dafür notwendige Energieeintrag liegt zwischen 5 und 40 kWs/l.

Wirtschaftlich ist es also - falls mit einer Ultraschallbehandlung des Rücklaufschlammes keine ausreichenden Effekte erzielbar sind -, den Zustrom in die Nachklärbecken bereits mit Ultraschall mit einem höheren Energieeintrag zu behandeln, um möglichst gleich die Bildung der störenden Schlammarten zu verhindern.

Reichen diese Maßnahmen zur Verringerung der Anzahl der Fadenbakterien im Belebtschlamm, der in das Nachklärbecken geleitet wird, nicht aus, so kann dieser Belebtschlamm zur Bildung von Bläh- und Schwimmschlamm führen. Ist solcher Schlamm vorhanden, können, wiederum mittels Ultraschall mit einem Energieeintrag zwischen 10 und 80 kWs/l bei Blähschlamm, die gebildeten Aggregate aus Fadenbakterien zerstört werden; es wird die Sedimentation des Schlammes erreicht. Andererseits werden bei dem vorhandenen Schwimmschlamm die Luftbläschen, die für den Auftrieb des Schlammes verantwortlich sind, aus der Suspension ausgetrieben, so daß auch dieser Schlamm sedimentieren kann.

Die technische Umsetzung kann durch ein oder mehrere Stabsonotroden in Durchflußzellen mit beispielsweise einer Leistung von beispielsweise 1 kW und einer Frequenz von 20 kHz erfolgen, wobei beim Einsatz von mehreren Sonotroden diese vorteilhafterweise in Reihe geschalten sind. Der Schlamm wird dann durch die die Sonotroden umgebenden Durchflußzellen gepumpt, und dabei wird die Energie mittels Ultraschall eingetragen.

Der konkret notwendige Energieeintrag hängt von der jeweiligen Aggregatfestigkeit der bereits vorhandenen Schlämme ab. Je höher die Aggregatfestigkeit der Schlämme ist, um so höher ist der notwendige Energieeintrag.

Die Anzahl der benötigten Sonotroden hängt von dem zu behandelnden Volumenstrom, von dem notwendigen Energieeintrag und den jeweiligen konkreten Gegebenheiten der Kläranlage ab. Die notwendige Verweilzeit in der Durchflußzelle der Sonotroden bestimmt die Anzahl. Die Verweilzeiten hängen ferner vom Trockenrückstandsgehalt (TR-Gehalt) im Schlamm ab, liegen jedoch in der Regel zwischen 1,5 und 150 s.

Im weiteren wird die Erfindung an mehreren Ausführungsbeispielen näher erläutert.

### Beispiel 1

Ein Ultraschallgerät mit einer Leistungsaufnahme von 1000 W und einer Sonotrode mit 40 mm Durchmesser, 540 mm Länge und einer Frequenz von 20 kHz wurde in den Volumenstrom des Belebtschlammes zwischen Belebungsbecken und Nachklärbecken einer Kläranlage eingebracht. Im Durchflußbetrieb erfolgte ein Energieeintrag von 0,25 kWs/l. Dadurch wurde der gesamte Volumenstrom des Belebtschlammes (Trockensubstanz-Gehalt: TS-Gehalt = 6 g/l) mit Ultraschall behandelt und durch die Austreibung der Gasblasen so die Bildung einer Schwimmschlammschicht auf dem Nachklärbecken nahezu vollständig verhindert. Der Vergleich mit der unbehandelten Originalprobe zeigte, daß bei Einleitung des unbehandelten Belebtschlammes 50 % der Oberfläche der Schlammsuspension mit flotiertem Schwimmschlamm bedeckt waren und daß nach der Ultraschallbehandlung des Belebtschlamm nur noch 3 % der Oberfläche der Schlammsuspension mit flotiertem Schwimmschlamm bedeckt waren.

### Beispiel 2

Bereits gebildeter Blähschlamm einer Kläranlage wurde abgezogen und mit Prozeßwasser aus der Belebtschlammeindickung im Verhältnis 1:1 vermischt (Trockenrückstandsgehalt: TR-Gehalt = 1,9 %). Die Ultraschallbehandlung wurde mit einem Gerät von 400 W Leistungsaufnahme und einer Sonotrode mit 22 mm Durchmesser (max. Amplitude 100 µm, max. Schalleistungsdichte 85 W/cm²) und einer Frequenz von 24 kHz durchgeführt.
Bei einem Batch-Versuch mit 500 mml Schlamm wurden durch einen Energieeintrag von 40 kWs/l die vorhandenen Fadenbakterien und Agglomerate davon vollständig zerstört und der Schlamm sedimentierte vollständig.

## Patentansprüche

1. Verfahren zur Verhinderung der Schwimm- und/oder Blähschlammausbildung und/oder zur Beseitigung von Schwimm- und Blähschlamm in Kläranlagen. bei denen der Belebtschlamm und/oder der Rücklaufschlamm und/oder die Bläh- und Schwimmschlämme mit Ultraschall behandelt werden.

2. Verfahren nach Anspruch 1, bei dem zur Verhinderung der Blähschlamm- und Schwimmachlammausbildung mittels Ultraschall eine Energie in Höhe von 0,1 bis 1 kWs/l in den Rücklaufschlamm oder den Belebtschlamm eingebracht wird.

3. Verfahren nach Anspruch 1, bei dem zur Beseitigung von Schwimmschlamm mittels Ultraschall eine Energie in Höhe von 0,1 bis 1 kWs/l eingebracht wird.

4. Verfahren nach Anspruch 1, bei dem zur Beseitigung von Blähschlamm mittels Ultraschall eine Energie in Höhe von 10 bis 80 kWs/l eingebracht wird.

5. Verfahren nach Anspruch 1, bei dem die im Blähschlamm enthaltenen Fadenbakterien durch Ultraschall zerkleinert werden.

6. Verfahren nach Anspruch 1, bei dem die Schwimmschlammbildung durch das Austreiben des Gases aus der Suspension mittels Ultraschall verhindert wird.

7. Verfahren nach Anspruch 1, bei dem der Energieeintrag durch ein oder mehrere 1-kW-Stabsonotroden in Durchflußzellen durchgeführt wird.

8. Verfahren nach Anspruch 1, bei dem die Beseitigung von Bläh- und Schwimmschlamm in einem Klärbecken oder auch außerhalb durchgeführt werden kann.

9. Verfahren nach Anspruch 1, bei dem die Verhinderung der Bildung von Bläh- und Schwimmschlamm durch Erhöhung der Verfügbarkeit von Phosphor-Verbindungen im Klärbecken durchgeführt wird.
